# EUROPEAN PATENT SPECIFICATION

(11) **EP 4 009 482 B1**
(45) Date of publication and mention of the grant of the patent: **25.11.2026**
(21) Application number: 21212113.1
(22) Date of filing: 02.12.2021
(51) Int. Cl.: H02J 7/70, H01R 13/24, A01D 34/00

(54) **CHARGING STATION FOR SELF-DRIVING ROBOT LAWNMOWER**
LADESTATION FÜR EINEN SELBSTFAHRENDEN ROBOTERRASENMÄHER
STATION DE CHARGE POUR TONDEUSE ROBOT AUTOPROPULSÉE

(30) Priority: 04.12.2020 IT 202000029933
(43) Date of publication of application: 08.06.2022
(60) Divisional application: 25179971.4 / 4 585 029
(73) Proprietor: Stiga S.p.A. in breve anche St. S.p.A., 31033 Castelfranco Veneto (TV) (IT)
(72) Inventor: COMIN, Andrea, Follina (TV) (IT); SCAPIN, Michele, Cittadella (PD) (IT); EMMA, Salvatore, Castelfranco Veneto (TV) (IT); FOSCARO, Carlo, Casacorba di Vedelago (TV) (IT); CECCHETTO, Mauro, San Martino di Lupari (PD) (IT); BASTASIN, Franco, Treviso (IT)
(74) Representative: PGA S.p.A.

(56) References cited:
- EP-A2- 2 960 100
- WO-A1-2013/100833
- CN-A- 104 124 730
- DE-U1- 29 824 813

## Description

### Field of the invention

The present invention relates to the field of charging stations for self-propelled devices. Since the self-propelled devices typically comprise a battery of the rechargeable type for their propulsion and for the operation of the related loads, the technical sector of the invention pertains to the technical sector of electrical contacts. In the preferred application of the present invention, the charging stations of interest are charging stations for self-driving robot lawnmowers.

### Prior art

Self-propelled devices are devices equipped with at least one motor apt to allow the movement of the device itself. Typically, this at least one motor is an electric motor, powered by a battery contained on board the device itself.

The batteries present in self-propelled devices are typically of the rechargeable type.

Self-propelled devices include, for example, self-driving robot lawnmowers (among the other self-propelled devices, dry and/or wet robot vacuum cleaners can be mentioned).

Self-driving robot lawnmowers are configured to perform their task (i.e. cutting grass) and then move, by means of a substantially autonomous guide, towards a charging station or device where there are electrical contacts that allow the transfer of electricity to the battery. The charging station or device is typically powered by the home electrical network.

Self-propelled devices, in order to allow the charging of the contained battery, are in turn equipped with electrical contacts.

Self-driving robot lawnmowers operate in outdoor environments and are often subject to getting dirty (for example, with earth and/or cut grass residues and/or due to humidity or rain).

Considerable efforts have been made by designers to develop electronic control systems that allow precise coupling between the self-propelled device and the charging station or device, since a precise coupling between these two elements determines a precise coupling of the electrical contacts of the self-propelled device and the charging station or device respectively, with the consequent advantage of being capable of transferring electricity efficiently.

This does not mean that the results achieved so far are limited, and in any case the optimization of coupling precision by means of electronic calculations does not remove the risk that dirt or humidity could compromise the coupling efficiency between the self-propelled device and the charging station or device.

Document EP2960100A2 describes a connection system between a charging station and a self-driving robot lawnmower, wherein the charging station includes a power head having planar electrical contacts disposed on the upper and lower faces of an insulating element and wherein the self-driving robot lawnmower includes a charging socket accommodating, at the top and at the bottom, flexible electrical contacts.

A first objective of the present disclosure is to describe a charging station to solve the drawbacks described above and in particular to allow a simple and efficient coupling between the charging station or device and the self-propelled device.

A second objective of the present disclosure is to make available improved configurations of electrical contacts (mutually coupled to each other) for a self-propelled device and for a charging station, which are particularly apt to be used in the outdoor environment of said self-propelled device and of said charging device. In particular, the aforesaid improved configurations are used to make the current and/or energy transfer particularly stable even in the case that the electrical contacts should become dirty, for example with earth, mud, or cut grass. Furthermore, the aforesaid improved configurations guarantee optimum electrical safety even in the event of infiltration of water (humidity, rain, or irrigation) at the level of the electrical contacts.

A third objective of the present invention is to make available improved configurations of electrical contacts which allow considerable ease of assembly, repair and maintenance and which over time remain reliably in their installation position, despite stresses deriving from the relative movements between the self-propelled device and the charging station upon their connection and upon their disconnection.

The aims of the present invention will be intended to be achieved in particular by comparing the characteristics of the present invention with the characteristics of known technical solutions, such as those described in patents EP2656718B1 and EP2717109B1, which contain evident limitations in terms of stability of the electrical contact in case of intrusion of dirt and/or electrical safety in case of water infiltration and/or ease of assembly and disassembly.

### Summary

In accordance with the present disclosure, a charging station (20) for a self-propelled device (10) is provided according to the independent claim 1.

Further embodiments are defined by the dependent claims.

### Drawings

The invention will now be described with reference to the attached figures, wherein in particular:

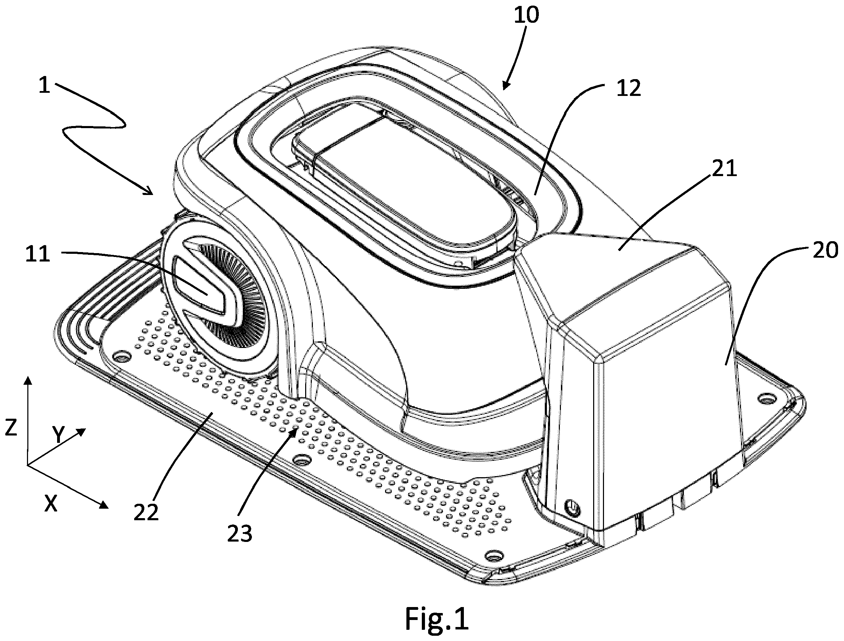

- Figure 1 shows a perspective view of a self-propelled device, in particular a self-driving robot lawnmower, coupled with a respective charging device, in particular a charging station;

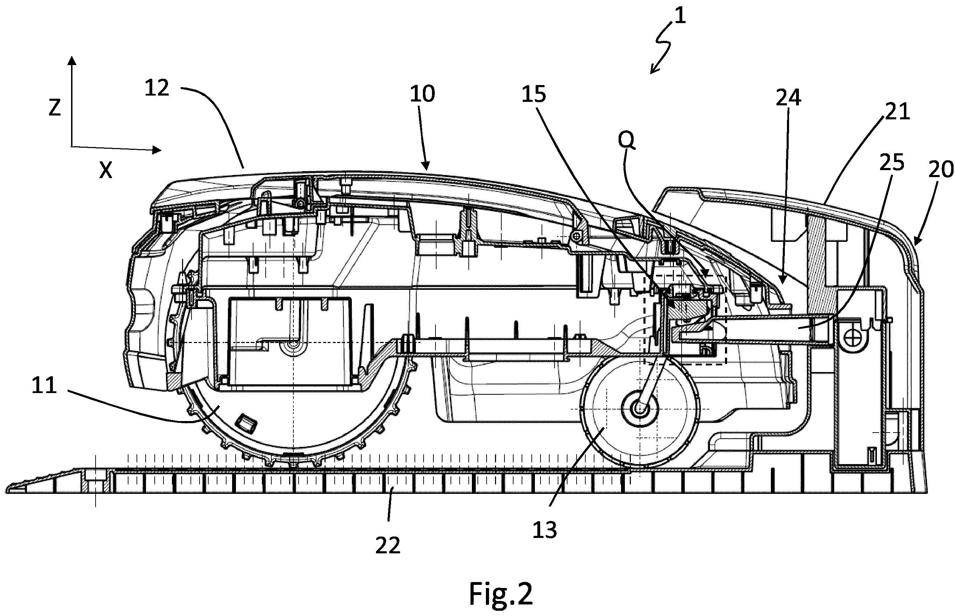

- Figure 2 shows a section of the self-driving robot lawnmower and of the charging device in the configuration of Figure 1;
- Figure 3 shows a perspective view of a charging socket of the self-driving robot lawnmower and of a part of a power head of the charging device in a disconnected configuration;
- Figure 4 shows a section of a charging socket of the self-propelled device and of a part of a power head of the charging device in a disconnected configuration;

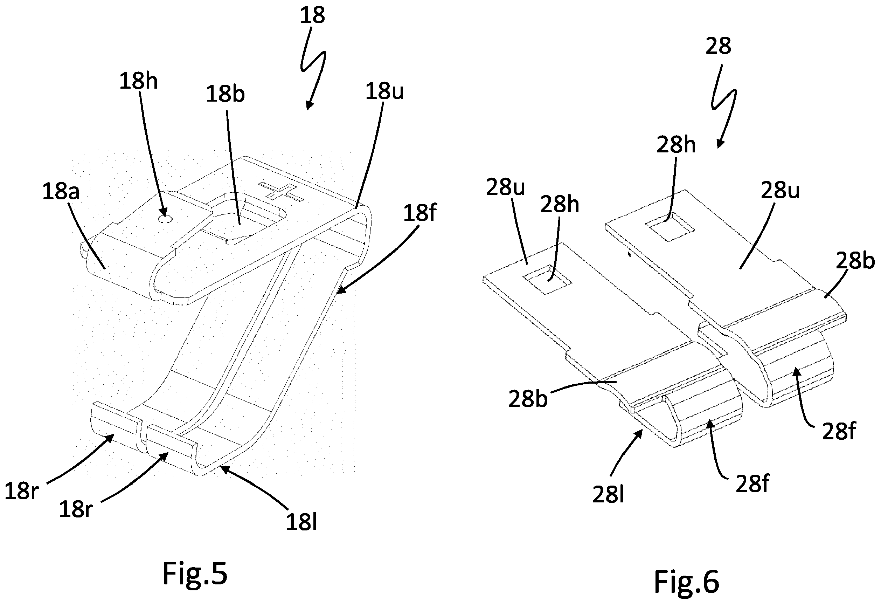

- Figure 5 shows a detail of electrical contacts of the charging socket, wherein said electrical contacts are in the form of folded metal sheets;
- Figure 6 shows a detail of electrical contacts of the power head, wherein said electrical contacts are in the form of folded metal sheets;
- Figure 7 shows a detail of a coupling configuration between the power head and the charging socket as per box Q of figure 2, i.e. it illustrates a section of a charging socket of the self-propelled device and of a part of a power supply of the charging device in a mutually connected configuration;

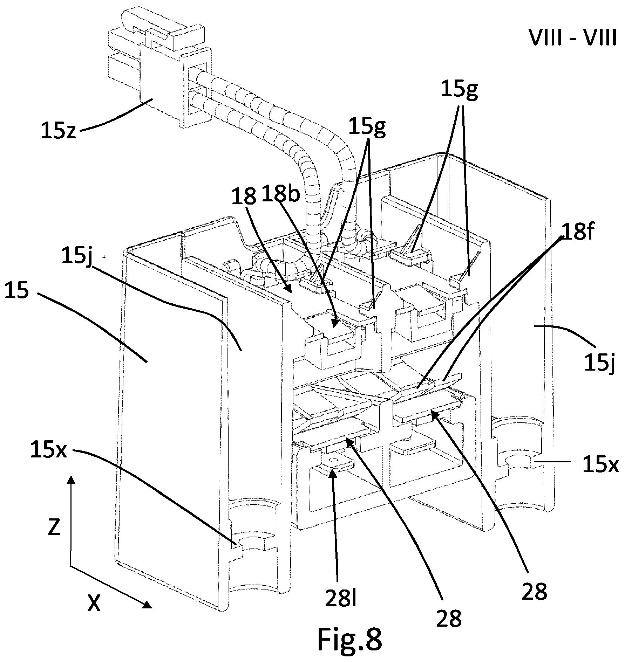

- Figure 8 shows a section along the lines VIII-VIII of Figure 7.

### Detailed description

The reference number 1 indicates as a whole an assembly, or kit, formed by a self-propelled device 10 and a charging station 20 for the same. The embodiment illustrated in the annexed figures shows a self-propelled device 10 in the form of a self-driving robot lawnmower and represents the preferred embodiment. However, this specific type of device must not be understood in a limiting way, being possible for example to contemplate a preferred embodiment wherein the self-propelled device 10 is a self-driving vacuum cleaner.

The preferred embodiment of the invention (according to which the self-propelled device 10 comprises a self-driving robot lawnmower) is designed to be used in an outdoor environment.

Where there are descriptions of parts or elements according to a specific orientation, for the sake of greater clarity, the spatial arrangement of the parts or elements will be referred to the following reference axes: X axis, or first reference axis, Y axis, orthogonal to the X axis, or second reference axis, and Z axis, orthogonal to the X axis and orthogonal to the Y axis, or third reference axis.

The self-propelled device 10 comprises a body equipped with an upper cover 12 under which at least one battery and one electric motor are enclosed, electrically connected to the battery, configured to supply mechanical energy for the movement of drive wheels 11 apt to allow the advancement of the self-propelled device 10. Optionally, the battery can power a first electric motor for the left drive wheel 11 and a second electric motor for the right drive wheel 11. In the embodiment illustrated in the attached figures, the drive wheels 11 are positioned in a substantially rear area of the self-propelled device 10, but this configuration must not be understood in a limiting way.

It is noted that the anterior-posterior spatial orientation of the self-propelled device 10 is along the X axis.

The self-propelled device 10 also comprises front wheels 13 of the idle type, which preferably, although not limitedly, are of the pivoting type, in particular pivoting around a substantially vertical axis, so as to allow the self-propelled device 10 to change its direction of advancement and/or to follow curved trajectories.

The self-propelled device 10 also comprises a drive motor, not shown in the annexed figures, which is configured to move a grass cutting blade (as a way of example and not as a limitation, rotating) when the self-propelled device 10 is a self-driving robot lawnmower. The grass cutting blade can be equivalently replaced by a similar movable element, for example a head equipped with one or more nylon threads.

The self-propelled device 10 comprises, in particular within a front portion substantially opposite to a rear portion, a charging socket 15 whose purpose is to allow the at least partial charging of the battery by transferring electrical energy coming from the charging station 20.

In particular, the self-propelled device 10 is configured to couple with the charging station 20 in a removable way. Advantageously, the charging station 20 is connected to means for recalling the self-propelled device 10 to the charging station, in order to carry out a charging operation of the battery evidently about to run out. Said means may comprise a guide wire apt to transmit a coded signal generated by the charging base and picked up by proper sensors provided on board the self-propelled device 10.

The self-propelled device 10 also comprises a control unit configured at least to control, in particular at least activate and/or deactivate, at least one of the motors of the drive wheels 11 and the drive motor. This control unit, equipped with its own memory into which a software program for operating the self-propelled device 10 is loaded, is not described in detail herein. Within the scope of the present invention, it is conceivable that the connection between the self-propelled device 10 and the charging station 20 makes it possible to update this software program, just as it is possible that, once the connection has been made, there is an exchange of information between the control unit of the self-propelled device 10 and the control unit of the charging station 20. For example, the charging station 20 can provide means for the connection to a remote network and the self-propelled device 10 can transmit information to the charging station 20, so that the charging station 20 can then make it available on a remote network.

The charging station 20, in the non-limiting embodiment shown in the attached figures, comprises a base plate 22 for supporting the self-propelled device 10. The base plate 22 is preferably of the planar type and/or is preferably made of plastic material. The extension of the base plate 22 is substantially equal to or greater than the area occupied by the self-propelled device 10. In particular, in a non-limiting embodiment, the width (measured along the Y axis) of the base plate 22 is at least equal to the width of the self-propelled device 10, and in particular it is at least equal to the inter-axle spacing between the drive wheels 11.

The dimensional characteristics of the base plate 22 are congenial to prevent the approaching maneuvers of the self-propelled device 10 from creating furrows on the ground. In order to improve the portability of the charging station 20, it can be provided that the base plate 22 is obtained by assembling two or more mutually separable portions.

In the embodiment shown in the attached figures, the base plate 22 is provided with a plurality of friction elements 23 apt to ensure sufficient friction of the drive wheels 11, which, as will be better described in the following text portions, push the self-propelled device 10 against a power head 25 of the charging station 20 by at least temporarily overcoming a contrasting force exerted between the electrical contacts of the charging socket 15 and of the power head 25 upon the respective partial insertion.

An end portion of the charging station 20 comprises a turret 21 protruding substantially vertically from the base plate 22 which delineates a substantial recess 24 wherein at least part of the front portion of the self-propelled device 10 is removably inserted during battery charging. The aforementioned power head 25 is substantially positioned within said recess and extends from the turret 21 in a substantially horizontal direction. The power head ends at the front with a front end wall indicated with the numerical reference 26. The turret 21 fulfills, in addition to the function of supporting the power head 25, keeping it stable at the correct height from the ground, also the function of protecting the power head from atmospheric agents (offering in particular shelter from the rain) and/or from impacts.

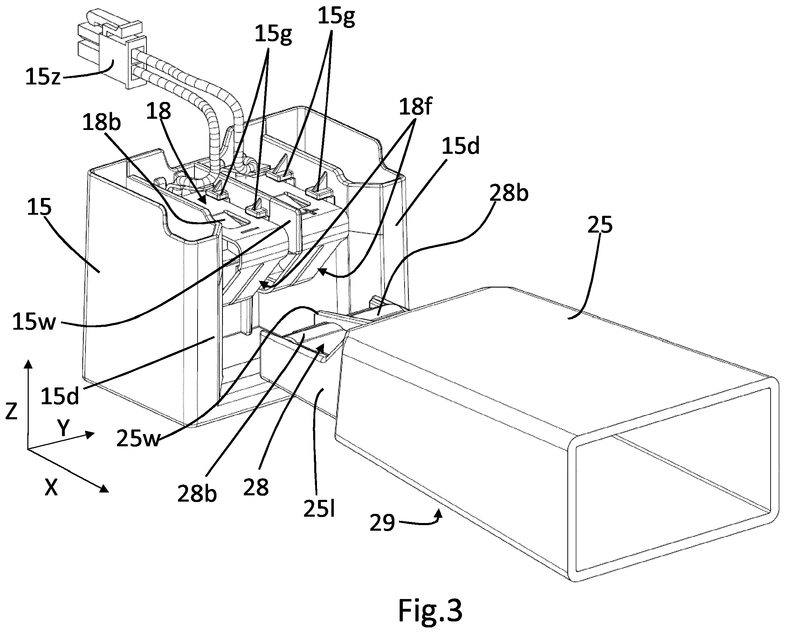

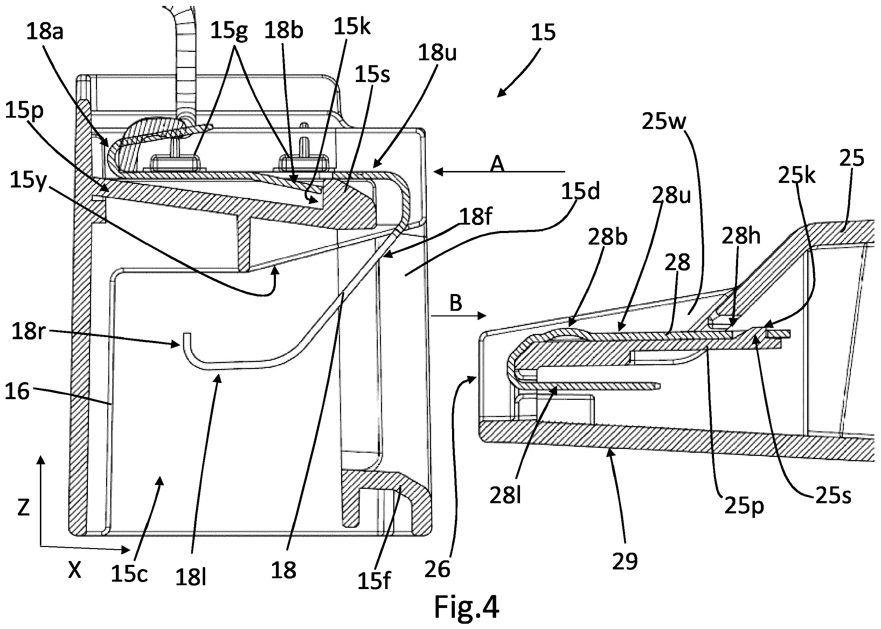

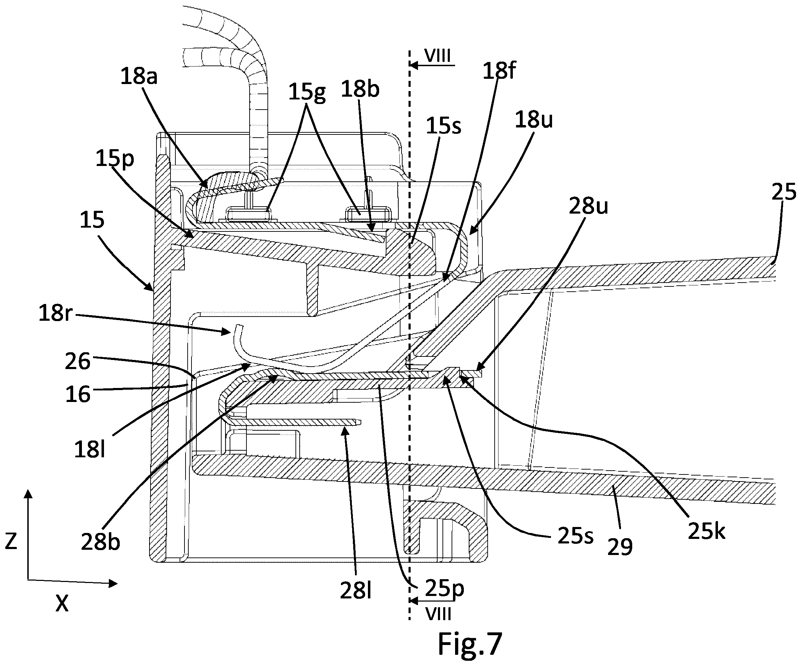

Figures 3 and 4 show a portion of the charging socket 15 and of the power head 25 in a separate configuration, wherein therefore between the two elements no electricity is transmitted, while Figure 7 shows the portion of the charging socket 15 and of the power head 25 in a connected configuration, wherein the passage of the electric current necessary for charging the battery of the self-propelled device is, therefore, possible.

In Figure 4 it is possible to note that the charging socket 15 has a bottom wall 15f shaped in such a way as to guide the front portion of the power head 25 upwards, assisting the insertion of the latter within a cavity 15c wherein electrical contacts 18 are located.

There are two electrical contacts 18, in order to have the possibility to power the battery at least in direct or single-phase alternating voltage or current; however, the electrical contacts 18 could be more than two, for example three. The electrical contacts 18 can properly be power contacts, as in the case of the attached figures, or auxiliary contacts apt to carry electrical control signals.

The electrical contacts 18 can be positioned only on one side of the cavity 15c and in particular lie only in a substantial correspondence with the upper side of the cavity 15c itself; this provides considerable flexibility for the design of the charging socket 15 and in particular allows considerable freedom in the realization of the lower portion and/or the external shape of the body of the charging socket 15 itself.

The cavity 15c is delimited at the top by a partition wall 15p which acts as a support for an upper portion of the electrical contacts 18. The charging socket 15 is provided with a rear wall 16 which delimits the cavity 15c in depth.

As can be seen in detail in Figure 4, and even more in detail in Figure 7, each of the electrical contacts 18 is made in the form of a curved and electro-conductive metal sheet, and comprises a substantially planar upper portion 18u, in use inserted above the partition wall 15p, and a front portion 18f joined to the upper portion 18u by means of a curved connector. The front portion 18f of the electrical contacts 18 preferably but not limitedly lies on a plane and is joined to a bottom portion 18l of the electrical contacts 18 which ends with a folded portion 18r. The curved connector allows the deformation of electrical contacts 18, and in particular allows the deformation of the assembly formed by the front portion 18f, the lower portion 18l and the folded portion 18r with respect to the upper portion 18u.

In a non-limiting embodiment, each of the electrical contacts 18 is made with a metal sheet of steel, preferably resistant to oxidation, for example stainless steel. This allows a longer duration of the metal sheet even in harsh environments, such as the one that can be found when the grass of a lawn is cut; these environments are in fact under conditions of high humidity.

In correspondence of the upper portion 18u there is a cut or engagement section 18b, wherein a recess is made by means of the U-shaped notch of a sub-portion of the upper portion 18u; this notch makes it possible to create a lamella oriented downwards, i.e. oriented towards the front portion 18f which in use is contrastingly embedded on a tooth 15s positioned in a substantial front end position of the partition wall 15p.

The Applicant points out that, starting from the curved connection, each of the electrical contacts 18 is divided into two different parts, independently movable and/or flexible, and also, preferably, symmetrical, so that in fact each of the electrical contacts 18 comprises, for each of said two parts, a front portion 18f, a lower portion 18l and a folded portion 18r.

Therefore, the first and the second part are independent in their own movement with respect to the movement of the other electrical contact part, they are flexible and each capable of establishing contact with a respective electrical contact 28 of the power head 25. The bipartition of each electrical contact 28 in two parts, each of which can be individually contacted by the power head 25 and can be individually deformable, allows a considerable increase in the reliability in establishing the electrical contact. In fact, even if one of the two parts should prove to be inoperative, for example due to too much dirt accumulated on it, the transfer of energy and/or current between the charging station 20 and the self-propelled device 10 would still persist by way of the other part of the electrical contact 18. Similar advantages to the aforesaid bipartition can also be obtained by providing a tripartition of the electrical contact 28 or a division of the electrical contact into a number of parts greater than three. Having said this, a number of parts equal to two constitutes an optimal compromise between the reliability of the electrical contact established and the mechanical strength of the individual parts, which, having an adequate width, do not show susceptibility to breakage.

The aforementioned contact, exerted towards the electrical contact of the power head 25, both in the case of electrical contacts 18 of the bipartite type, and in the case of electrical contacts of the non-bipartite type, is exerted by means of a pressure force on part of the respective electrical contact 28; in the embodiment illustrated in the accompanying figures, the direction of the pressure force exerted by the electrical contact 18 on the respective electrical contact 28 of the power head is oriented substantially in parallel to the Z axis.

The aforementioned contact, exerted towards the electrical contact of the power head 25, both in the case of electrical contacts 18 of the bipartite type, and in the case of electrical contacts of the non-bipartite type, occurs by maintaining at least the contact portions and/or portions proximal to contact, of the electrical contacts 18 of the charging socket 15 and of the electrical contacts 28 of the power head 25, on substantially parallel and juxtaposed planes. A planar contact helps reduce losses due to the Joule effect.

Although this specific configuration is not to be considered mandatory (in fact, said bipartition could be absent) it allows greater flexibility in maintaining optimal electrical contact with the respective electrical contact 28 of the power head and allows reducing the risk of approximative contacts which could lead, in use, to the creation of high local resistance to the passage of the electric current which would negatively affect the battery charging energy efficiency: in other words, the presence of the bipartition allows optimizing the efficiency of current and/or electricity transfer. In detail, for each of the electrical contacts 18, the aforementioned division provides a first contact sheet and a second contact sheet juxtaposed in a transverse direction (i.e. juxtaposed along the direction identified by the Y axis) with respect to the charging socket 15.

The upper portion 18u ends on a first side with the curved connector, oriented downwards, and in correspondence of a second side opposite to the first side it ends with a connection connector 18a ending on a terminal portion of metal sheet in correspondence with which the power cables that transfer electrical energy to the battery are inserted. Preferably, but not limitedly, the terminal portion is provided with a through hole 18h.

In a non-limiting embodiment, these power cables are cables configured and designed to support at least the passage of current and/or voltage sufficient to charge the battery of the self-propelled device 10, they are electrically isolated by a plastic sheath and terminate, preferably and not limitedly, with an insulated Faston type connector, indicated in particular in Figure 3, with the reference number 15z.

The charging socket 15 comprises an intermediate partition wall 15w oriented on a plane parallel to a plane identified by the X axis and by the Z axis. This partition wall allows separating the first electrical contact 18, represented in Figure 3 as a negative contact (symbol "-"), from the second electrical contact 18, represented in Figure 3 as a positive contact (symbol "+"). The intermediate partition wall 15w is made of electrically insulating material, preferably of plastic material; in a non-limiting embodiment, this intermediate partition 15w is made in one piece with the body of the charging socket 15.

In a non-limiting embodiment, which is by the way represented in the attached figures, the intermediate partition wall 15w forms a symmetry wall of the charging socket 15; when the latter is viewed from the front, i.e. along a direction parallel to the X axis, the portion of the charging socket 15 to the left of the intermediate partition wall 15w is identical but mirrored to the portion of the charging socket 15 to the right of the intermediate partition wall 15w.

The electrical contacts 18 are configured to be contrastingly embedded or snapped in correspondence of a respective seat on the charging socket 15. This configuration is clearly visible for example in Figure 4, where the arrow A, which is substantially parallel to the direction of the at least partial insertion of the power head 25 within the charging socket 15, represents the direction of insertion of the electrical contact 18 in the respective seat. Advantageously, this electrical contact 18 is inserted within the respective seat in such a way that the upper portion 18u lies above the partition wall 15p, and is held at the top by a plurality of stops 15g which retain the upper face of the upper portion 18u in correspondence of its left and right side. Preferably, the number of stops 15g is equal to 2 on one side and 2 on the opposite side of the upper portion 18u. The latter is therefore retained at the top by the stops 15g and at the bottom by the partition wall 15p.

Preferably, but not limitedly, the stops 15g are made in one piece with the body of the charging socket, and are made of plastic material, electrically insulating. Figure 3 shows a particular embodiment of the stops 15g which are at least partially housed and/or supported by the partition wall 25w.

A production step of the charging socket 15 can therefore comprise the realization of the body in plastic material by means of, by way of example and not as a limitation, a molding process, or injection molding. Following the realization of the body in plastic material, the electrical contacts 18 are installed or assembled on the charging socket.

An assembly step of the electrical contacts 18 on the charging socket 15 may comprise a step of blocking the first electrical contact 18 ("-") and the second electrical contact 18 ("+") on the partition wall.

As each electrical contact 18 is inserted within its respective seat (in particular, by means of an axial insertion operation), the cut portion 18b first comes into contact with the tooth 15s and is subsequently pushed upwards (or anyway, flexed) as long as it does not exceed the tooth 15s itself. At this point, for elasticity, the cut portion 18b is repositioned again in a rest position and remains held by a rear wall 15k of the tooth, so that it is impossible to extract the electrical contact 18 from its respective seat on the charging socket 15. In this way, even if the sliding friction exerted by the electrical contacts 28 of the power head 25, during extraction, is of considerable force, the extraction of the electrical contact 18 is prevented with a consequent increase in reliability and reduction of the risk of breakage or failures.

Therefore, the electrical contacts 18 comprise a flexible portion and can assume at least a first rest configuration wherein they extend for a first determined dimension (in particular a height, measured along the Z axis) within the cavity 15c of the charging socket 15. This means that, equivalently, the electrical contacts 18, in the first rest configuration, have a first encumbrance within the cavity 15c of the charging socket 15.

The electrical contacts 18 can also be positioned in a second deformed or compressed configuration, wherein they extend for a second determined dimension (in particular a height, measured along the Z axis) within the cavity 15c of the charging socket 15. This second determined dimension is smaller than the first determined dimension. This means that the encumbrance (second encumbrance) that the electrical contacts 18 have within the cavity 15c of the charging socket 15 is smaller than the aforementioned first encumbrance.

The second configuration is an unstable configuration, and lasts until the power head 25 is positioned within the cavity 15c. The elastic characteristics of the electrical contacts 18 are exploited both to ensure that, in the second configuration, the electrical contacts 18 of the self-propelled device 10 press against the electrical contacts 28 of the charging station 20, thus ensuring electrical continuity, and also to ensure the switching from the first configuration to the second configuration (bringing the electrical contacts 18 to the reduced size and to the reduced overall encumbrance when the connection between the self-propelled device 10 and the charging station 20 is established) and from the second configuration to the first configuration (restoring the dimension at rest and the encumbrance at rest of the electrical contacts 18 when the self-propelled device 10 is disconnected from the charging station 20).

As can be seen in Figure 3, the charging socket 15 comprises a body having two guide walls 15d respectively arranged on a left side and on a right side of the front portion of the cavity 15c and which are inclined in a specular manner with respect to the axis of symmetry ideally identified by the intermediate partition wall 15w, which also represents the axis of symmetry of the cavity 15c. Said guide walls 15d form a sort of funnel such as to allow and/or assist in centering the power head 25 in a transverse direction, i.e. in a direction parallel to the Y axis with respect to the cavity 15c.

In a preferred and non-limiting embodiment, said guide walls 15d are integral and/or integrally formed on the body of the charging socket 15, and are made of electrically insulating material.

In particular, measuring along the Y axis, the width of the cavity 15c is greater (maximum) in correspondence of the opening or frontal plane of the cavity 15c and tapers gradually as, moving along the X axis, one moves towards the inside of the cavity 15c. For this reason, the charging socket 15 can be defined as capable of making a transversely self-centering coupling with the respective power head 25.

The body of the charging socket 15 also comprises two left and right end side walls. In the inner part of these walls, the body of the charging socket has two recesses 15j which terminate on a base 15x equipped with a through hole designed to allow the passage of a screw, for example a self-tapping screw or equivalent fixing means apt and intended to allow locking (preferably removably) the charging socket 15 on the body of the self-propelled device 10. The use of a removable charging socket 15 is particularly convenient for applications such as grass cutting, in particular because the environment wherein this charging socket is exposed is particularly severe and this, together with the repeated coupling and uncoupling with the power head 25, and therefore in the event of wear or failure or breakage, allows technicians to quickly replace the charging socket 15 itself without the need for replacement or costly repairs of the self-propelled device 10.

Also the electrical contacts 28 are contrastingly embedded or snapped within the head 25. Numerically, the number of electrical contacts 28 is equal to the number of electrical contacts 18. These electrical contacts 28 can also be power contacts, as in the case described herein and represented in the attached figures, or be auxiliary contacts apt to carry control signals.

The electrical contacts 28 are positioned only on one side of the power head 25, and in particular only on an upper side of the front portion of the power head 25. This allows considerable freedom in designing the shape of the power head 25.

As illustrated for example in Figure 4, the power head 25 can comprise a front portion having a profile defining a concavity, and the electrical contacts 28 of said power head 25 are positioned at least partially in substantial correspondence of the concavity.

As can be seen in Figure 4, the electrical contacts 28 are also made in the form of a curved and electro-conductive metal sheet. Preferably, but not limitedly, the electrical contacts 28 of the power head 25 are made with a metal sheet of steel, optionally of steel resistant to oxidation such as, for example, stainless steel.

Each of the electrical contacts 28 comprises an upper portion 28u which, by means of a curved fitting (preferably substantially bending by 180°), joins with a lower portion 28l which extends at least partially, preferably integrally below the upper portion 28u. In proximity to the curved connection of the sheet, a convex portion 28b protrudes convexly from the upper portion 28u.

A notch 28h, preferably square or rectangular in shape, is obtained on the upper portion 28u of each of the electrical contacts 28 and creates an open and through hole which allows the insertion of at least part of a tooth 25s for locking the electrical contact 28. In use, the electrical contact 28 is inserted within the respective seat on the power head 25 with a substantially axial insertion along a direction identified by the arrow B, which is preferably, although not limitedly, parallel to the arrow A and is therefore parallel to the direction along which the power head can be removed from the charging socket 15.

The electrical contacts 28 of the power head 25 are mutually separated by a partition wall 25w which ends on a surface or front wall 26 substantially aligned to the direction identified by the Z axis (in other words the partition wall 25 is a vertical wall). The partition wall 25w is made of plastic material, in particular of electrically insulating plastic material, and identifies a sort of plastic sheet capable of preventing electrical contact between the two electrical contacts 28.

Observing the partition wall 25w laterally, i.e. along a direction substantially parallel to the Y axis, it is possible to observe that an upper side of the partition wall 25w is inclined with respect to the X axis, and the partition wall 25w tapers, reducing its height (measured with respect to the Z axis), gradually moving from a rear portion towards the front portion and/or towards the surface or front wall 26. The tapered shape of the partition wall 25 assists the vertical centering (Z axis) of the power head 25 within the cavity 15c.

In a non-limiting embodiment, by the way represented in the attached figures, the partition wall 25w forms a symmetry wall for the power head 25; when the latter is viewed from the front, i.e. along a direction parallel to the X axis, the power head portion 25 to the left of the partition wall 25w is identical but specular to the power head portion 25 to the right of the partition wall 25w.

The power head 25 comprises a bottom wall indicated by the numerical reference 29. In a preferred and non-limiting embodiment, which is the one shown in the attached figures, this bottom wall 29 is not parallel to the X axis but is inclined with respect to the latter. The inclination of the bottom wall 29 is in the opposite direction with respect to the direction assumed by the partition wall 25w, and therefore as one proceeds observing the power head 25 towards the front surface or wall 26, the reduction in height of the power head 25 occurs both from below, due to the inclination of the bottom wall 29, and from above, due to the inclination of the partition wall 25w.

In a preferred and non-limiting embodiment, the bottom wall 29 of the power head 25 has a substantially planar conformation, so as to allow the creation of a plane or in any case a sliding surface of the power head 25 against the bottom wall 15f of the charging socket 15, which assists the centering within the cavity 15c.

A production step of the power head 25 can, therefore, comprise the manufacture of the body in plastic material of the same by means of, by way of example and not as a limitation, a molding process, or injection molding. Following the manufacture of the body in plastic material, the electrical contacts 28 are installed or assembled on the power head.

An assembly step of the electrical contacts 28 on the power head 25 comprises a step of blocking the first electrical contact 28 ("-") and the second electrical contact 28 ("+") in the respective seat.

As each electrical contact 28 is inserted (in particular by axial insertion) within the respective seat, a rear end portion of the upper portion 28u firstly comes into contact with the locking pin 25s and is therefore deformed until the tooth does not enter within the recess made by the notch 28h. At this point the electrical contact is in the insertion configuration on the power head 25. From the representation in Figure 7 it can be appreciated that the locking pin 25s has an inclined front wall, whose profile is apt to cause a progressive increase of height and consequently a progressive deformation of the electrical contact 28 during its axial insertion along the power head 25 (in fact, the profile of the front wall of the locking pin 25s acts as a cam during the reciprocal movement between the electrical contact 28 and the power head 25 which occurs during the assembly of the charging station 20).

At this point the notch 28h is blocked by a rear wall 25k of the tooth 25s and the extraction of the electrical contact 28 in a parallel but opposite direction to the arrow B is therefore prevented. In this way, even if the sliding friction exerted by the electrical contacts 18 of the charging socket 15, during extraction, is of considerable force, the extraction of the electrical contact 28 is prevented with a consequent increase in reliability and reduction of the risk of breakage or failures.

The convex portion 28b is configured to come into contact with at least a lower portion 18l of said electrical contacts 18 of the charging socket 15; in particular, the convex portion 28b is apt to remain in contact with the lower portion 18l of the electrical contacts of the charging socket 15 when the power head 25 is at least partially inserted within the charging socket 15, as clearly visible in Figure 7. The provision of the convex portion 28b on the electrical contact 28 is highly advantageous, as it greatly improves the reliability of the electrical contact 28. In fact, examples which do not fall within the scope of the appended claims and which provide a completely planar upper portion 28u are susceptible to a loss of reliability as the dirt builds up. On the contrary, the claimed embodiment, i.e. the one represented in the figures annexed to the present description with the convex portion 28b, and more generally the embodiments which provide a raised portion which (regardless of its geometry) interrupts the continuity of the upper portion 28u, ensure the desired reliability, by establishing at least two areas of pressure of the electrical contacts 18 of the charging socket 15 on the electrical contacts 28 of the power head 25. In a configuration of maximum insertion of the assembly made by the power head 25 and the charging socket 15, the front end wall 26 of the power head substantially leans against the rear wall 16 of the recess 15c of the charging socket 15. The maximum insertion condition described herein is clearly a condition apt and destined to allow a transfer of electrical energy between the electrical contacts 28 of the power head 25 and the electrical contacts 18 of the charging socket 15 and optionally apt and destined to allow the transfer of electrical energy from the electrical contacts 28 of the power head 25 towards the contacts 18 of the charging socket 15.

In the maximum insertion configuration, in a non-limiting embodiment, the convex portion 28b is in contact with the lower portion 181 of the electrical contacts of the charging socket 15. The mechanical stop offered by the rear wall 16 allows defining the correct reciprocal position of the electrical contacts 18 of the charging socket 15 with the electrical contacts 28 of the power head 25 and prevents excessive penetration of the power head 25 into the charging socket.

Preferably, but not limitedly, the power head has an inclined part on the upper part, which has substantially the same inclination with respect to the Z axis assumed by the front portion 18f of the electrical contacts 18, and this allows to assist the correct mutual positioning of the electrical contacts 18 of the charging socket 15 with the electrical contacts 28 of the power head, because if the power head tends to couple on the charging socket 15 in a too high position relatively to the latter, it is pushed downwards.

In the light of the above, it can therefore be defined that the reciprocal conformation of at least a front part of the power head 25 (which is the part destined to be inserted within the cavity 15c of the charging socket 15) and of the charging socket 25 are self-centering, optionally vertically self-centering, and/or that the charging socket 15 is configured to allow an automatic centering in the vertical direction, therefore along a direction parallel to the Z axis.

The geometric characteristics of the charging socket 15 and of the power head 25 are such that, when the connection between the self-propelled device 10 and the charging station 20 is established, access and/or intrusions into the charging socket 15 are prevented.

A coupling method, in particular a removable coupling method, between the charging socket 15 and the power head 25, is described herewith. The coupling method, which does not fall within the scope of the appended claims, first of all comprises a step of mutual approximation between the charging socket 15 and the power head 25, ideally in such a way that there is an axial alignment between at least the front portion of the power head 25 with the cavity 15c. In this ideal alignment, the intermediate partition wall 15w is ideally aligned with the partition wall 25w along the X axis.

In a non-limiting embodiment, a lower side 15y of the intermediate partition wall 15w has an inclination which is substantially the same as the one assumed by the upper profile of the partition wall 25w. In particular, the approximation comprises a motion step of the self-propelled device 10 according to a predetermined motion routine and by means of the activation of its drive wheels 11, which, as already seen, are powered by the at least one electric motor which in turn receives electrical energy from the battery. In particular, the aforementioned approximation can comprise an automatic motion of the self-propelled device 10.

In case of misalignment (within a certain amount) between the charging socket 15 and the power head 25, that is in case of approximation of the power head 25 transversely not in a direction aligned with the transversal symmetry axis substantially identified by the intermediate partition wall 15w, there is an alignment step of the power head 25 with respect to the charging socket 15, in particular with respect to the cavity 15c of the power head, which in particular is a forced alignment.

This alignment is given by the conformation of the guide walls 15d which, with their conformation determining the previously mentioned funnel shape for the opening of the cavity 15c, as the power head 25 is pushed towards the cavity 15c, determines an alignment of the same with the cavity.

The misalignment between the charging socket 15 and the power head 25 can also be vertical, and it can in particular be given both by a non-coaxiality and inclination of the theoretical axis of insertion of the power head within the charging socket 15, and by an excess or excessive reduction of the height of the power head 25 with respect to the charging socket 15.

The reciprocal conformation of the electrical contacts 18, 28, and/or the presence of the partition wall 25w increasingly tapered in shape as it approaches the front wall 26, and/or the presence of the bottom wall 15f of the charging socket 15, allow to solve in an almost automated way also possible coupling inaccuracies in the vertical direction.

It is noted herein that the previously mentioned funnel, in the exact embodiment illustrated in the attached figures, is given by:
- the left guide wall 15d, on the left side of the opening of the cavity 15c,
- the right guide wall 15d, on the right side of the opening of the cavity 15c,
- the bottom wall 15f, on the lower side of the opening of the cavity 15c,
- the front portion 18f of the electrical contacts 18 of the charging socket 15, on the upper side of the opening of the cavity 15c.

In particular, therefore, the front portion 18f of the electrical contacts and the bottom wall 15f act together to push a portion of the power head 25 in a vertical centering within the cavity 15c, more particularly with the progressive axial insertion of the power head 25 within the cavity 15c itself.

When the front portion of the power head 25 and in particular the substantially proximal portion of the curved connector of the electrical contacts 28 comes into contact with the front portion 18f of the electrical contacts 18 of the charging socket 15, the electrical contacts 18 of the charging socket 15 begin to deform and no longer lie in the first rest configuration. As the power head is inserted within the charging socket 15, that is, into the cavity 15c, the deformation of the electrical contacts 18 of the charging socket 15 increases at least partially, and consequently there is a relative sliding of the surfaces of the electrical contacts 18 of the charging socket 15 and of the electrical contacts 28 of the power head 25.

In particular, the insertion of the power head 25 within the cavity of the charging socket 15 determines a temporary step, which is at least permanent until the power head is inserted within the charging socket 15, wherein the at least partial deformation causes a movement of the electrical contacts 18 from a first rest configuration, wherein the electrical contacts 18 of the charging socket 15 extend for a first determined dimension, in particular height, within the cavity 15c of the charging socket 15 and/or wherein the electrical contacts 18 of the charging socket 15 have a first encumbrance within the cavity 15c of the charging socket 15, to a second deformed configuration wherein the electrical contacts 18 of the charging socket 15 extend for a second determined dimension, smaller than the first determined dimension, in particular height, within the cavity 15c and/or wherein the electrical contacts 18 of the charging socket 15 have a second encumbrance within the cavity 15c of the charging socket 15, the second encumbrance being smaller than the first encumbrance, wherein the second deformed configuration results from the insertion of at least part of the power head 25.

The method described herein therefore provides for a step of mutual contact between the electrical contacts 18 of the charging socket 15 and the electrical contacts 28 of the power head wherein a force exerted by the electrical contacts 18 of the charging socket 25 takes place (and, when bipartite, wherein a force exerted by a predetermined portion of the first and the second part of the electrical contacts 18 takes place) on part of the respective electrical contact 28 of the power head 25. The aforesaid force is the resultant of the pressure exerted by the electrical contacts 18 due to their elastic characteristics.

In particular, therefore, when the electrical contacts 18 of the charging socket 15 are bipartite and each has a first and a second part independently movable and flexible and configured to establish and/or maintain, at least temporarily, contact with a respective electrical contact 28 of the power head 25, in the contact step a pressure force is exerted by a predetermined portion of the first and the second part of the electrical contacts 18 on part of the respective electrical contact 28 of the power head 25.

In any case, in the contact step, the first and the second part of the electrical contacts 18 of the charging socket 15 establish and/or maintain, at least temporarily, a contact with the respective electrical contact 28 maintaining at least respective contact portions and/or portions proximal to contact on substantially parallel and juxtaposed planes.

In a preferred and non-limiting embodiment, the transfer of electrical energy through the electrical contacts 18, 28 can occur in the immediate instant in which the connection circuit for charging closes, i.e. when both the electrical contacts 18 of the charging socket 15 contact the electrical contacts 28 of the power head 25.

However, this condition is not exclusive, since it could be equivalent to proceed with a delay, managed via software through a data processing unit installed on board the self-propelled device 10 or the charging station 20, so that the battery charging shall take place only after a predetermined time from when the mutual contact between the electrical contacts 18 of the charging socket 15 and the electrical contacts 28 of the power head 25 is detected. This is to allow the establishment of an optimal contact between the aforementioned electrical contacts and to increase the efficiency of electricity transfer to the battery.

It is herein pointed out that if one of the two bipartite parts of the first or of the second electrical contacts 18 of the charging socket 15 should fail, lose flexibility or break completely, keeping the charge would in any case be guaranteed by the second part of the contact itself, and for this reason there would be no loss of operation in the possibility of charging the battery of the self-propelled device 10.

When a data processing unit of the self-propelled device 10 and/or a data processing unit of the charging station 20 electronically identifies at least one of a first condition wherein a predetermined charging level of the battery is reached and/or a second condition wherein full charge or maximum charge of the battery is reached, said one or both data processing units can be configured to interrupt the flow of electrical energy to the battery and/or to cause a physical separation of the power head 25 from the charging socket 15. Said physical separation can, as a way of example and not as a limitation, take place by means of an activation of the drive wheels 11 in such a way as to cause a movement back of the self-driving robot lawnmower.

The movement back of the self-propelled device 10 causes a translation of the power head 25 in extraction with respect to the cavity 15c, and therefore a reciprocal sliding of the surfaces of the electrical contacts 18 of the charging socket 15 on the surfaces of the electrical contacts 28 of the power head 25.

With the movement back of the self-propelled device 10, the electrical contacts 18 of the charging socket 15 progressively reduce their deformation, thus progressively passing from the second deformed configuration to the first rest configuration.

The passage of electric current is definitively terminated when even only one of the first and second electrical contacts 18 of the charging socket 15 loses contact with the respective first or second electrical contact 28 of the power head 25.

From what has been described above and from what is represented in the accompanying drawings, it is easy to understand how the present invention fully achieves all the purposes for which it was conceived, i.e. the reliability of the electrical connection between the self-propelled device and the charging station, also in critical conditions (for example dirt deposited on the electrical contacts), the optimal electrical safety characteristics and the simplicity of assembly and repair.

Finally, it is clear that additions or variants obvious to a person skilled in the art can be applied to the device and method described up to now, without thereby departing from the scope of protection provided by the appended claims.

The invention is not limited to the embodiments illustrated in the drawings; therefore, when in the following claims certain elements are identified by reference numbers or signs, these reference numbers or signs shall be deemed to be provided for the sole purpose of increasing the intelligibility of the claims, and shall have no limiting effect on the scope of protection.

## Claims

1. Charging station (20) for a self-driving robot lawnmower (10) equipped with a battery and a charging socket (15) comprising respective electrical contacts (18) and configured to enable said battery to be recharged by means of the electrical contacts (18), wherein the charging station (20) comprises a body (21, 22) equipped with a power head (25) fitted with electrical contacts (28), configured to be removably coupled with, and at least partially inserted within, the charging socket (15),
the charging station (20) being configured to allow a transfer of electrical energy between the electrical contacts (28) of the power head (25) and the electrical contacts (18) of the charging socket (15) by an at least partial deformation of the electrical contacts (18) of the charging socket (15),
**characterised in that** the electrical contacts (28) of the power head (25) comprise an upper portion (28u) at least partially planar and at least one convex portion (28b) protruding convexly from the upper portion (28u),
wherein said convex portion (28b) is configured to come into contact with at least one lower portion (18l) of said electrical contacts (18) of the charging socket (15) and is configured to remain in contact with said lower portion (18l) of the electrical contacts of the charging socket (15) when the power head (25) is at least partially inserted within the charging socket (15) and
wherein the upper portion (28u) and the convex portion (28b) are at least partially resting on a support surface, said support surface being a support plane (25p) of the power head (25).

2. Charging station (20) according to claim 1, wherein the power head (25) and/or the electrical contacts (28) are configured to cause an at least partial deformation of the electrical contacts (18) of the charging socket (15), when the power head (25) is partially inserted within the charging socket (15).

3. Charging station (20) according to claim 1 or to claim 2, wherein the electrical contacts (28) of the power head (25) are positioned on one side only of the power head (25), said one side only of the power head (25) being an upper side.

4. Charging station (20) according to one or more of the preceding claims, comprising a base plate (22) for supporting a self-driving robot lawnmower (10), said base plate (22) being obtained by assembling two or more mutually separable portions, the base plate (22) having a greater extension than the area occupied by the self-driving robot lawnmower (10).

5. Charging station (20) according to one or more of the preceding claims, wherein the electrical contacts (28) of the power head (25) are contrastingly embedded, and/or snapped in the body of the power head (25), and
wherein the power head (25) comprises at least one locking pin (25s) configured to lock the electrical contacts (28) in an insertion configuration, each of the electrical contacts (28) comprising a perforation or notch (28h) into which the locking pin (25s) is introduced when the electrical contacts (28) are in said insertion configuration on the power head (25).

6. Charging station (20) according to claim 5, wherein the locking pin (25s) comprises a front wall shaped to cause an at least temporary deformation of at least a rear portion of the electrical contacts (28) of the power head (25), upon insertion of the electrical contacts (28) on the power head itself.

7. Charging station (20) according to one or more of the preceding claims, wherein the electrical contacts (28) comprise:
- a first electrical contact (28) and a second electrical contact (28), electrically insulated from each other,
- a partition wall (25w) positioned in substantial correspondence with a front portion of the power head (25),
said partition wall (25w) being configured to physically separate and electrically isolate the first electrical contact (28) from the second electrical contact (28).

## Patentansprüche

1. Ladestation (20) für einen selbstfahrenden Mähroboter (10), der mit einem Akku und einer Ladebuchse (15) ausgestattet ist, die entsprechende elektrische Kontakte (18) umfasst und dazu ausgebildet ist, ein Wiederaufladen des Akkus mittels der elektrischen Kontakte (18) zu ermöglichen,
wobei die Ladestation (20) einen Körper (21, 22) umfasst, der mit einem Ladekopf (25) ausgestattet ist, der mit elektrischen Kontakten (28) versehen und dazu ausgebildet ist, lösbar mit der Ladebuchse (15) gekoppelt und zumindest teilweise in diese eingeführt zu werden,
wobei die Ladestation (20) dazu ausgebildet ist, eine Übertragung elektrischer Energie zwischen den elektrischen Kontakten (28) des Ladekopfs (25) und den elektrischen Kontakten (18) der Ladebuchse (15) durch eine zumindest teilweise Verformung der elektrischen Kontakte (18) der Ladebuchse (15) zu ermöglichen,
**dadurch gekennzeichnet, dass** die elektrischen Kontakte (28) des Ladekopfs (25) einen zumindest teilweise ebenen oberen Abschnitt (28u) und mindestens einen konvexen Abschnitt (28b) umfassen, der konvex aus dem oberen Abschnitt (28u) hervorsteht,
wobei der konvexe Abschnitt (28b) dazu ausgebildet ist, mit mindestens einem unteren Abschnitt (18l) der elektrischen Kontakte (18) der Ladebuchse (15) in Kontakt zu kommen, und dazu ausgebildet ist, mit dem unteren Abschnitt (18l) der elektrischen Kontakte der Ladebuchse (15) in Kontakt zu bleiben, wenn der Ladekopf (25) zumindest teilweise in die Ladebuchse (15) eingeführt ist, und
wobei der obere Abschnitt (28u) und der konvexe Abschnitt (28b) zumindest teilweise auf einer Auflagefläche aufliegen, wobei die Auflagefläche eine Auflageebene (25p) des Ladekopfs (25) ist.

2. Ladestation (20) gemäß Anspruch 1, wobei der Ladekopf (25) und/oder die elektrischen Kontakte (28) dazu ausgebildet sind, eine zumindest teilweise Verformung der elektrischen Kontakte (18) der Ladebuchse (15) zu bewirken, wenn der Ladekopf (25) teilweise in die Ladebuchse (15) eingeführt ist.

3. Ladestation (20) gemäß Anspruch 1 oder Anspruch 2, wobei die elektrischen Kontakte (28) des Ladekopfs (25) nur auf einer Seite des Ladekopfs (25) angeordnet sind, wobei diese eine Seite des Ladekopfs (25) eine Oberseite ist.

4. Ladestation (20) gemäß einem oder mehreren der vorstehenden Ansprüche, umfassend eine Grundplatte (22) zum Abstützen eines selbstfahrenden Mähroboters (10), wobei die Grundplatte (22) durch Zusammenfügen von zwei oder mehr voneinander trennbaren Teilen gebildet ist und die Grundplatte (22) eine größere Ausdehnung aufweist als die vom selbstfahrenden Mähroboter (10) eingenommene Fläche.

5. Ladestation (20) gemäß einem oder mehreren der vorstehenden Ansprüche, wobei die elektrischen Kontakte (28) des Ladekopfs (25) kontrastierend in den Körper des Ladekopfs (25) eingebettet und/oder in diesen eingerastet sind, und
wobei der Ladekopf (25) mindestens einen Verriegelungsstift (25s) umfasst, der dazu ausgebildet ist, die elektrischen Kontakte (28) in einer Einsteckkonfiguration zu verriegeln, wobei jeder der elektrischen Kontakte (28) eine Perforation oder Kerbe (28h) aufweist, in die der Verriegelungsstift (25s) eingeführt wird, wenn sich die elektrischen Kontakte (28) in der Einsteckkonfiguration am Ladekopf (25) befinden.

6. Ladestation (20) gemäß Anspruch 5, wobei der Verriegelungsstift (25s) eine Vorderwand aufweist, die so geformt ist, dass sie beim Einsetzen der elektrischen Kontakte (28) in den Ladekopf selbst eine zumindest vorübergehende Verformung zumindest eines hinteren Abschnitts der elektrischen Kontakte (28) des Ladekopfs (25) bewirkt.

7. Ladestation (20) gemäß einem oder mehreren der vorstehenden Ansprüche, wobei die elektrischen Kontakte (28) Folgendes umfassen:
- einen ersten elektrischen Kontakt (28) und einen zweiten elektrischen Kontakt (28), die elektrisch voneinander isoliert sind,
- eine Trennwand (25w), die im Wesentlichen im Bereich eines vorderen Abschnitts des Ladekopfs (25) angeordnet ist,
wobei die Trennwand (25w) dazu ausgebildet ist, den ersten elektrischen Kontakt (28) physisch von dem zweiten elektrischen Kontakt (28) zu trennen und elektrisch zu isolieren.

## Revendications

1. Station de charge (20) pour une tondeuse à gazon robotisée autonome (10) équipée d'une batterie et d'une prise de charge (15) comprenant des contacts électriques (18) respectifs et configurée pour permettre à ladite batterie d'être rechargée à l'aide des contacts électriques (18), dans laquelle la station de charge (20) comprend un corps (21, 22) équipé d'une tête d'alimentation (25) munie de contacts électriques (28), configurée pour être couplée de manière amovible à, et au moins partiellement insérée dans, la prise de charge (15),
la station de charge (20) étant configurée pour permettre un transfert d'énergie électrique entre les contacts électriques (28) de la tête d'alimentation (25) et les contacts électriques (18) de la prise de charge (15) par une déformation au moins partielle des contacts électriques (18) de la prise de charge (15),
**caractérisée en ce que** les contacts électriques (28) de la tête d'alimentation (25) comprennent une portion supérieure (28u) au moins partiellement plane et au moins une portion convexe (28b) faisant saillie de manière convexe à partir de la portion supérieure (28u),
dans laquelle ladite portion convexe (28b) est configurée pour entrer en contact avec au moins une portion inférieure (18l) desdits contacts électriques (18) de la prise de charge (15) et est configurée pour rester en contact avec ladite portion inférieure (18l) des contacts électriques de la prise de charge (15) lorsque la tête d'alimentation (25) est au moins partiellement insérée à l'intérieur de la prise de charge (15) et
dans laquelle la portion supérieure (28u) et la portion convexe (28b) reposent au moins partiellement sur une surface de support, ladite surface de support étant un plan de support (25p) de la tête d'alimentation (25).

2. Station de charge (20) selon la revendication 1, dans laquelle la tête d'alimentation (25) et/ou les contacts électriques (28) sont configurés pour entraîner une déformation au moins partielle des contacts électriques (18) de la prise de charge (15), lorsque la tête d'alimentation (25) est partiellement insérée à l'intérieur de la prise de charge (15).

3. Station de charge (20) selon la revendication 1 ou la revendication 2, dans laquelle les contacts électriques (28) de la tête d'alimentation (25) sont positionnés uniquement sur un côté de la tête d'alimentation (25), ledit côté unique de la tête d'alimentation (25) étant un côté supérieur.

4. Station de charge (20) selon l'une ou plusieurs des revendications précédentes, comprenant une plaque de base (22) pour supporter une tondeuse à gazon robotisée autonome (10), ladite plaque de base (22) étant obtenue par assemblage de deux portions ou plus, mutuellement séparables, la plaque de base (22) ayant une étendue supérieure à la surface occupée par la tondeuse à gazon robotisée autonome (10).

5. Station de charge (20) selon l'une ou plusieurs des revendications précédentes, dans laquelle les contacts électriques (28) de la tête d'alimentation (25) sont enchâssés de manière contrastée, et/ou encliquetés dans le corps de la tête d'alimentation (25), et
dans laquelle la tête d'alimentation (25) comprend au moins une goupille de verrouillage (25s) configurée pour verrouiller les contacts électriques (28) dans une configuration d'insertion, chacun des contacts électriques (28) comprenant une perforation ou une encoche (28h) dans laquelle la goupille de verrouillage (25s) est introduite lorsque les contacts électriques (28) se trouvent dans ladite configuration d'insertion sur la tête d'alimentation (25).

6. Station de charge (20) selon la revendication 5, dans laquelle la goupille de verrouillage (25s) comprend une paroi avant conformée pour entraîner une déformation au moins temporaire d'au moins une portion arrière des contacts électriques (28) de la tête d'alimentation (25), lors de l'insertion des contacts électriques (28) sur la tête d'alimentation elle-même.

7. Station de charge (20) selon l'une ou plusieurs des revendications précédentes, dans laquelle les contacts électriques (28) comprennent:
- un premier contact électrique (28) et un second contact électrique (28), électriquement isolés l'un de l'autre,
- une paroi de séparation (25w) positionnée sensiblement en correspondance avec une portion avant de la tête d'alimentation (25),
ladite paroi de séparation (25w) étant configurée pour séparer physiquement et isoler électriquement le premier contact électrique (28) du second contact électrique (28).
